# EUROPEAN PATENT APPLICATION

(11) **EP 1 781 064 A1**
(43) Date of publication of application: **02.05.2007**
(21) Application number: 04771870.5
(22) Date of filing: 19.08.2004
(51) Int. Cl.: H04R 7/02

(54) **DIAPHRAGM FOR SPEAKER**

(71) Applicant: OG Corporation, Osaka-shi, Osaka 532-8555 (JP); MATSUSHITA ELECTRIC INDUSTRIAL CO., LTD., Osaka 571-8501 (JP)
(72) Inventor: ISHIDA, Hiroyuki, OG Corporation, Osaka, 5328555 (JP); TAKAHASHI, Ken, OG Corporation 1-43, Osaka, 5328555 (JP); SUZUKI, Takashi c/o Mat.ELEC.Ind.Co., Ltd., Osaka-shi, Osaka 540-6319 (JP); OMORI, Tatsuya c/o Mat.Elec.Ind.Co., Ltd, Osaka-shi, Osaka 540-6319 (JP); MIZONE, Shinya c/o Mat.Elec.Ind.Co., Ltd., Osaka-shi, Osaka 540-6319 (JP); MURAKAMI, Koichi, Okura Industrial Co., Ltd., Kagawa 763-8508 (JP); KISHIUE, Kiyoshi, Okura Industrial Co., Ltd., Kagawa 763-8508 (JP)
(74) Representative: White, Duncan Rohan
(86) International application number: PCT/JP2004/011909
(87) International publication number: WO 2006/018880

(57) **Abstract**

A smaller-sized and acoustically excellent speaker diaphragm is inexpensively provided using the mixture of a specially surface-coated woody material and a mass-producible synthetic resin.

The mixture is composed of a non-chlorinated synthetic resin and a powdery cellulose material whose particle size falls within a range of from *5 µm* to 500 *µm*. The cellulose material has been subjected to a surface treatment to enhance its affinity to the non-chlorinated synthetic resin, and 30 % to 70 % by weight of the cellulose material is contained in the mixture.

## Description

### TECHNOLOGICAL FIELD OF THE INVENTION

The present invention relates to the structure of a speaker diaphragm that constitutes a speaker serving as an instrument for putting out therefrom regenerated sound waves.

### BACKGROUND ART

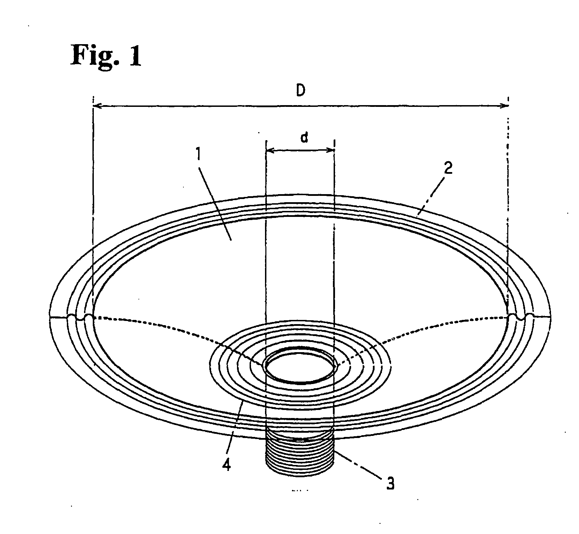

As well known in the art, the conventional speaker devices have each comprised two principal parts, that is an electromechanical transducer and a diaphragm combined therewith. The transducer converts the electrical energy of electric signals into mechanical vibration energy, and this vibration energy output from the transducer does activates in turn the diaphragm to vibrate itself and radiate an audio or the like acoustic energy. Fig. 1 schematically shows the structure of an example of such a diaphragm together with other relevant and adjacent parts. A voice coil 3 is attached to the central portion of the diaphragm 1, with a flexible diaphragm edge 2 being secured to the outer periphery of this diaphragm. A flexible damper 4 also flexible is connected with the diaphragm central portion. Both the edge and damper are fixed on and carried by the inner walls of a frame (not shown) so as to freely vibrate relative thereto. If and when signal currents are fed to the voice coil 3 inserted and held in a magnetic field that is formed by means of an electromagnetic circuit (also not shown), then the diaphragm central portion will vibrate to output sounds.
Patent Document 1: Japan Laying-Open Gazette No. Hei.5-328487,
Patent Document 2: ibid. No. Hei.6-165288, and
Patent Document 2: ibid. No. Hei.8-47084.

### DISCLOSURE OF THE INVENTION

### ¶ OBJECTS TO BE RESOLVED HEREIN

It has been reported that both the peripheral and central regions of a diaphragm 1 should desirably vibrate synchronously at the same phase at each frequency. In such a case, a flat sound pressure-frequency characteristics curve will be provided for the regenerated sounds within a normal audio-frequency range. Elasticity of ordinary diaphragms *per se* will however give rise to a certain problem. If the input frequency rises higher and higher, then the diaphragm peripheral portion will vibrate at a phase more and more delayed relative to that at which the central portion so do. In a certain range of input frequencies, those peripheral and central portions are likely to vibrate at reversed phases, thereby causing partial cancellation of the sounds from said portions. This phenomenon may be detected as dips or local depressions appearing on the frequency characteristics graph. Also likely to occur is an intensive resonance between the central portion and a certain particular portion. Resultant peaks on the characteristics graph, as well as the dips just mentioned above, do render poorer the quality of regenerated sounds. Such a sectional or local resonance of speaker diaphragm 1 does generally result from an asymmetric bending of the material of said diaphragm, and thereby probably producing strains in high-order harmonic waves. Reportedly, configuration and certain physical properties of diaphragm seem to be important factors of this resonance. Among the physical properties, density, Young's modulus and *tan* δ (internal mechanical loss) of the diaphragm material will remarkably affect the frequency characteristics and the level of strains. Some guide lines have recently been proposed on how to select these factors within their preferable ranges. However, it is not necessarily so easy for the currently available materials to meet technical requirements. Many efforts are still needed when designing the structure of a speaker and developing better diaphragm materials thereof, because they must ensure a flatter frequency characteristics and a higher quality of regenerated sounds.

The present invention was made to resolve these problem by optimizing the material of speaker diaphragm. Now, synthetic resins easier to process into any desired shape, as well as certain cellulose materials such as woody ones to provide improved physical properties, are highlighted herein. In detail, a mixture of such a resin and powdery (or fine granular) cellulose material is proposed herein so as to efficiently and inexpensively produce speaker diaphragms of an improved acoustic performance.

### ¶ MEANS FOR ACHIEVING THE OBJECTS

The speaker diaphragm of the present invention may be composed of a non-chlorinated synthetic resin intermixed with a powdery cellulose material whose particle size falls within a range of from 5 *µm* to 500 *µm.* Thus, the present diaphragm may be a molded piece of such a mixture of the resin and cellulose material.

### ¶ ADVANTAGES AFFORDED HEREIN

The cellulose powder constituting the diaphragm of the invention may preferably have its particle surfaces having undergone a surface esterification process. By virtue of thus improved affinity to the synthetic resin molecules, the cellulose powder can now be blended with the resin at a remarkably increased ratio thereto to show proper density, Young's modulus and a higher value of *tan δ*. These improved parameters will prove sufficiently effective to a better performance of the speaker diaphragm, as will be confirmed by testing it built in a speaker. In the sectional and local resonance range, the frequency characteristic curve will show considerably lower peaks and shallower dips, becoming flatter as a whole with a lowered level of strains. As also apparent from the results of comparative audio tests, the present speaker diaphragm will produce regenerated sounds of an excellent and comfortable tone. In addition, temperature coefficients of the Yong's modulus and *tan δ* are improved herein so that the regenerated tone quality and timbre does not undesirably vary from season to season but will remain stable in spite of any change in ambient temperature.

Manufacture of the present speaker diaphragm is facilitated by the improved affinity between the cellulose material powder and the synthetic resin. The present invention owes this feature to an excellent fluidity of the mixture of these powder and resin. Either injection or extrusion method can be applied to any ordinary wide-use molding apparatus for the various resins, thereby avoiding any surplus investment for the overall production equipment. Running conditions for such a molding apparatus do not differ at all from those employed in usual cases. Even if the blend ratio of cellulose powder were increased close to its upper limit, the flowability of said mixture would not be impaired to lower manufacture efficiency. Not only the molds but also any cylinders and/or screws will not be torn off soon but will be durable longer, so that maintenance cost for the producing apparatus is lower as compared with the other cases using any inorganic fillers in place of cellulose powders.

Further, the intermix for producing the speaker diaphragm as noted above can be reused. Even if the materials of this diaphragm must eventually be discarded, the non-chlorinated resin will enable incineration of these materials. They can be burnt without emitting any toxic gases or leaving any amount of residual ash, thus avoiding the problem of environmental pollution.

### EMBODIMENTS OF THE INVENTION

The present speaker diaphragm (its main portion will be referred to hereinafter as a "diaphragm 1", for concise description) provided to achieve the above objects is a molded piece of a mixture of a non-chlorinated synthetic resin and a cellulose material powder whose particle size falls within a range of from 5 *µm* to 500 *µm* (and more desirably from 10 *µm* to 400 *µ m*). The non-chlorinated resin that is either of a heat-setting nature or of a thermoplastic nature may typically be chosen from a group consisting of polyolefin resins, polystyrene resins, polyester resins and the like. Among these resins, polystyrene resins are most preferable because of their mechanical properties and their easiness to process, and also from the viewpoint of avoiding environmental pollution. As for the cellulose material powder, it may be selected from a group consisting of wood powders, fine paper particles, powdery pulps, powdery cotton linter, bamboo powders, kenaf powders, jute powders, bagasse powders and the like cellulose powders. These powder particles may be subjected to a surface treatment, if necessary, for the purpose of affording the possibility of forming chemical bonds between them and the synthetic resin and thus improving their affinity thereto. The ratio by weight of cellulose powder to resin may be designed to be from 30 % to 70 %, and more preferably from 40 % to 60 %, of the mixture weight. An excessive blend ratio of cellulose powder will render the diaphragm so brittle that it can not be adapted to certain uses.

Anhydrides of polybasic acids, such as maleic anhydride, may be effective reagents for use to carry out the surface esterification of cellulose powders. Mixtures of three components that is cellulose powder esters, synthetic resins and small amounts of organic peroxides such as benzoyl peroxide are useful to enhance the affinity between each cellose powder and each resin. By virtue of this feature, the ratio of cellulose powder can be set at a higher value without any fear of lowering the flowability of such a mixture. Thus, a smoother molding process as well as an efficient manufacture will be ensured herein. Such a higher ratio of cellulose powder will match any polyolefin resin mixed therewith, so that a simple pre-grinding may suffice for direct painting and bonding of a resultant product, that is a speaker diaphragm. It will be understood that the bonding force as well as stability of a coated surface membrane can be enhanced by any proper means. Examples of such means may be the conducting of any proper preliminary surface treatment such as the plasma treatment, and the application of any proper primer compound to the surface.

Although as summarized above the non-chlorinated resin may be either a heat-setting or a thermoplastic resin, the latter is more preferable. The most proper example are polypropylene resins selected from the group consisting of polyolefin resins. Polypropylene resins are advantageous in that they can easily be molded into any desired articles of good physical properties. No problem will be encountered in the recycling or disposal of used inexpensive polypropylene products. Injection molding is more preferable than extrusion, both being feasible with use of any wide-use molding apparatus desirably operating at temperatures that fall within a range of from about 160 °C to 200 °C. A powder of white cedar (or Japanese *'hinoki'* cedar) may be blended with the resin to be molded at such a temperature to give a fragrant product. Fragrance of the used cellulose powder may be intensified or modified using any proper synthetic perfumery or the like.

As also summarized above, the surface-treated cellulose powder particles of a strong affinity to the resin can be mixed therewith at a high ratio thereto. By virtue of this feature, the speaker diaphragm 1 of the invention is of such an increased rigidity as withstanding well any tendency of this diaphragm to make a sectional and local vibration. The value of *tan* δ (internal mechanical loss) of cellulose powder and that of the resin blended therewith will function in a synergistic, cumulative or supplementary manner, thereby providing a speaker diaphragm of a higher *tan* δ. Owing to such raised values of Young's modulus and *tan* δ, the speaker diaphragm 1 of the invention is now less likely to produce any sectional and local resonance, so as to operate with an improved frequency characteristics. Further, the level of non-linear and/or excessive strains that would result from the bending elastic deformation of diaphragm is also suppressed herein to ensure a good tone and timbre of regenerated sounds.

Due to the improved affinity provided between the cellulose powder and resin molecules, the fluid mixture thereof flows smoothly to give an extremely thin diaphragm about 0.1 *mm* to 0.5 *mm* thick. The conventional injection molding apparatus operating under ordinary molding conditions will lower equipment cost as well as running cost. Such a good flowability of mixture will not only enhance manufacture efficiency but also suppress maintenance cost that would otherwise be raised by rapid degradation of molds, cylinders and the like in case of using inorganic fillers in place of a cellulose powder.

As also discussed above, the composite material of diaphragm bodies deficient of any chlorinated resin can be recycled without any problem, or may be incinerated without producing any amount of toxic gases or hazardous residual ash that have been one of serious burdens to the protection of environment from pollution.

### EXAMPLES

Fig. 1 illustrates EXAMPLE 1 of the present speaker diaphragm shown in its perspective outlook. The diaphragm 1 provided as the EXAMPLE 1 is of the so-called cone type having a conical appearance with a somewhat curved generatrix. Its outer periphery is connected by a discrete edge 2 (usually called free edge) to the inside of a frame (not shown). Attached by an annular connector to the central portion of this diaphragm is a voice coil 3, and this connector is a damper 4 that is likewise fixed on the inside of said frame.

The speaker diaphragm 1 of EXAMPLE 1 is composed of: (1) a polypropylene resin as the non-chlorinated resin, (2) a wood powder as the cellulose powder having an average particle size of 200 *µm,* and 100 weight parts of this powder having been surface-esterified using 10 weight parts of maleic anhydride, and (3) benzoyl peroxide as the organic peroxide. 49.5 % by weight of the polypropylene resin, 50 % by weight of the wood powder and 0.5 % by weight of benzoyl peroxide were blended with each other to give a moldable mixture. (4) This moldable mixture was then molded into the shape of diaphragm 1 at a prescribed resin temperature of 190 °C. The thus produced diaphragm had a diameter 'D' of 100 *mm,* a thickness of 200 *µm* at its portions adjacent to outer periphery and central bore. The diameter 'd' of this bore for retention of the voice coil was 20 *mm*, and an overall density of this diaphragm 1 was 1.10 gr./c.c.

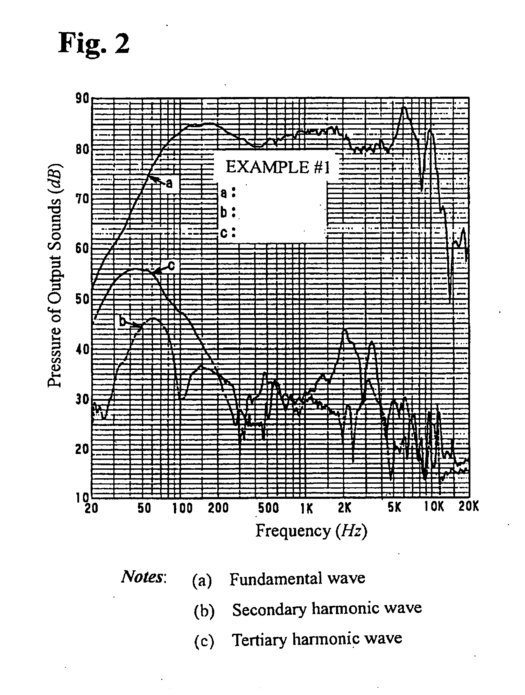

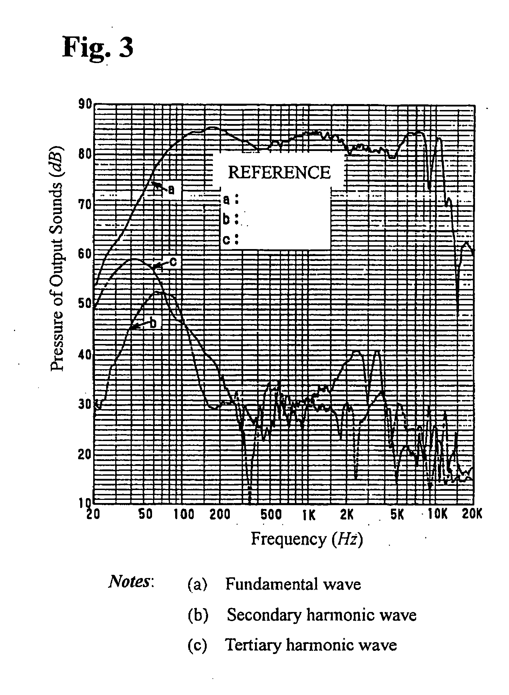

An edge 2 made of a thin foamed sheet of polyurethane was attached to the outer periphery of diaphragm 1 of EXAMPLE 1. The thus prepared speaker body (of a mouth diameter of 12 *cm*) was then subjected to the tests of frequency characteristics, as to the levels of its output sound pressure, its secondary harmonic wave, and its tertiary harmonic wave. In Fig. 2 showing the results of these tests, the reference symbols (a), (b) and (c) respectively denote a fundamental wave, the secondary harmonic wave, and tertiary harmonic wave. For the purpose of comparison, a reference speaker comprising a reference diaphragm of the same shape and dimension as the EXAMPLE 1 was prepared using 30 % by weight of mica blended with the polypropylene. Test results of this reference sample are given in Fig. 3, wherein the respective symbols (a), (b) and (c) denote the same items as those denoted in Fig. 2.

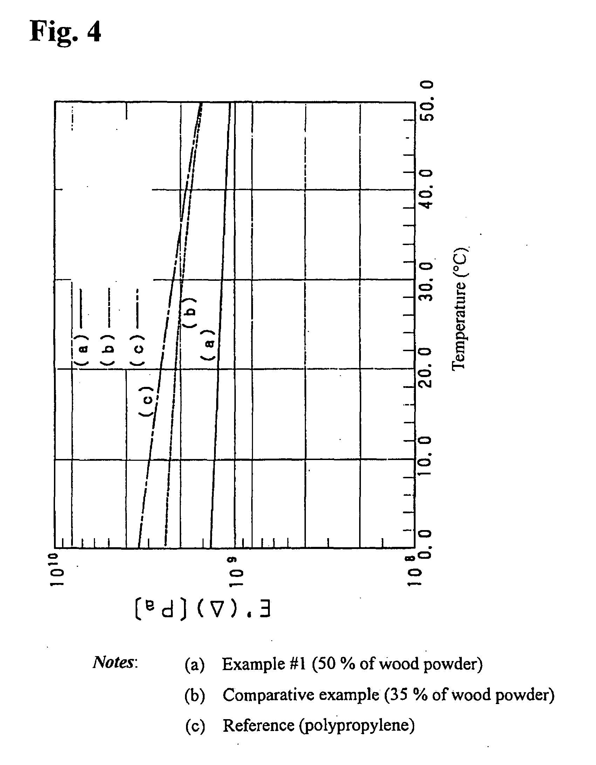

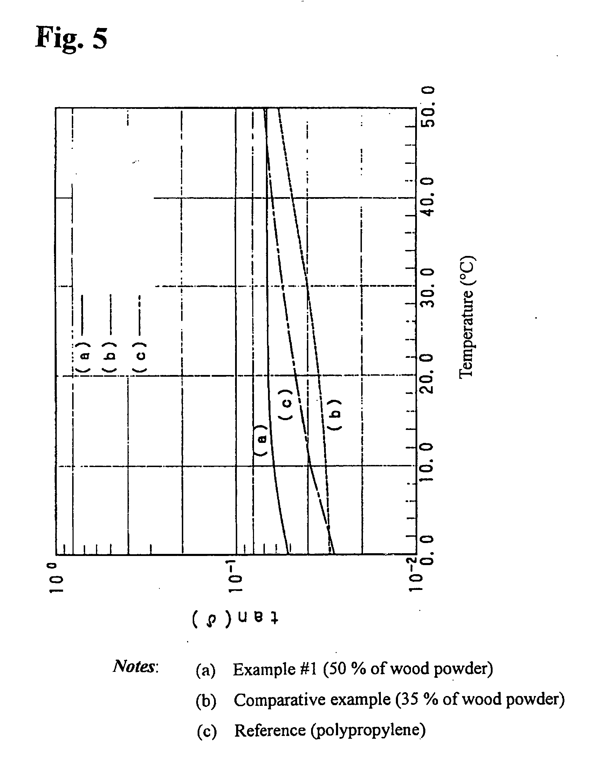

Fig. 4 is a graph showing the relationship found between the Young's modulus and temperature, with Fig. 5 showing the relationship found between tan δ and temperature. In Figs. 4 and 5, the curves (a), (b) and (c) represent the performance of the diaphragm material in EXAMPLE 1, the performance of a COMPARATIVE example of said material, and the performance of a REFERENCE or CONTROL of said material. The COMPARATIVE material of diaphragm was prepared by blending 35 weight % of surface-treated wood powder (near but not beneath the lower limit of the claimed range) with 65 weight % of polypropylene. The REFERENCE material of diaphragm was prepared by blending 35 weight % of mica with 65 weight % of polypropylene. The tests of performance depending on temperature were carried out, in view of the practical conditions in use of speakers, over a range of 0 °C to 50 °C.

The performance data that are given in Figs. 2 and 3 tell that any noticeable difference in the sound pressure was not detected within a frequency range of 50 *Hz* to 5 *KHz* (this range being most important to audio feeling) between the tested speakers. In contrast, as for the secondary harmonic waves and at its peak frequency of about 60 *Hz*, EXAMPLE 1 showed a level lower than REFERENCE by about 7 *dB*. Similarly, as for the tertiary harmonic waves and at its peak frequency of 40 *Hz*, EXAMPLE 1 showed a level lower than REFERENCE by about 3 *dB*. Such lowered level of the high-order harmonic waves does mean that regenerated sounds are not so indistinct or thick but clearer to be more comfortable to audience. 30 listeners monitored the difference between the sounds regenerated with EXAMPLE 1 and that regenerated with REFERENCE speaker. Twenty-three (23) persons among them did rate the performance of EXAMPLE 1 higher than that of REFERENCE. Two (2) persons however rated higher the REFERENCE than EXAMPLE 1, with the remaining five (5) persons sensing no difference between the two speakers. The cause of such a difference observed in the high-order harmonic between the tested speakers may be the difference in the mechanical properties of diaphragm materials. Due to the diminished tendency of EXAMPLE 1 to make a bending vibration, it may have shown such lowered level of harmonic levels at the peaks. In addition as shown in Figs. 4 and 5, EXAMPLE 1 showed merely a slight change in the mechanical properties such as Young's modulus and *tan* δ in response to change in ambient temperature. This is because the rigidity and anti-resonance effect of the speaker diaphragm of EXAMPLE 1 are never or scarcely affected by ambient temperature, thus causing no noticeable variation from season to season in the tone or timbre of regenerated sounds.

Any alternative materials equivalent to those as described above may be employed herein to construct the speaker diaphragm, and any proper molding conditions including the molds and the heating means therefor can adopted herein. Thus, the foregoing typical embodiments and modifications thereof are not intended to restrict the scope, but may be varied or altered insofar as the same purposes and functions are achieved by means of any equivalent structural features, without affecting the pith and morrow of the present invention.

### BRIEF DESCRIPTION OF THE DRAWINGS

[Fig. 1] Perspective view of a speaker diaphragm as EXAMPLE 1 of an embodiment.
[Fig. 2] Frequency characteristics graph of the levels of regenerated sound pressure and high-order harmonic waves, which a speaker with the diaphragm of EXAMPLE 1 built therein did show.
[Fig. 3] Frequency characteristics graph of the levels of regenerated sound pressure and high-order harmonic waves, which another speaker with the diaphragm of REFERENCE built therein did show.
[Fig. 4] Graph of a relationship that was observed between the Young's modulus and temperature, respectively for the diaphragm materials of EXAMPLE 1, COMPARATIVE example and REFERENCE.
[Fig. 5] Another graph of the relationship that was observed between the value of *tan δ* and temperature, respectively for the diaphragm materials of EXAMPLE 1, COMPARATIVE example and REFERENCE.

### ¶ REFERENCE NUMERALS

1 .... Diaphragm
2 .... Edge
3 .... Voice coil
4.... Damper

## Claims

1. A speaker diaphragm made of a mixture comprising a non-chlorinated synthetic resin intermixed with a powdery cellulose material whose particle size falls within a range of from 5 *µm* to 500 *µm.*

2. A speaker diaphragm as defined in claim 1, wherein 30 % to 70 % by weight of the powdery cellulose material is contained in the mixture.

3. A speaker diaphragm as defined in claim 1, wherein the non-chlorinated synthetic resin is selected from the group consisting of polyolefin resins, polyester resins and polystyrene resins.

4. A speaker diaphragm as defined in claim 1 or 2, wherein the powdery cellulose material has been subjected to a surface treatment to enhance its affinity to the non-chlorinated synthetic resin.

5. A speaker diaphragm as defined in claim 1, 2 or 3, wherein the mixture is colored with a colorant.

6. A speaker diaphragm as defined in claim 1, 2 or 4, wherein the powdery cellulose material has a natural fragrance, and the molding of the mixture has been carried out at a temperature of from 160 °C to 200 °C.

7. A speaker diaphragm as defined in any one of the preceding claims 1 to 6, wherein the surface treatment for enhancing the affinity of the powdery cellulose material to the non-chlorinated synthetic resin is esterification using an anhydride of a polybasic acid.

8. A speaker diaphragm as defined in claim 7, wherein the mixture is composed of the non-chlorinated synthetic resin, the powdery cellulose material and an organic peroxide.
